Europäisches Patentamt

European Patent Office

Office européen des brevets

(19)

(11) Veröffentlichungsnummer : **0 512 309 B1**

# (12) EUROPÄISCHE PATENTSCHRIFT

(45) Veröffentlichungstag der Patentschrift :
**15.02.95 Patentblatt 95/07**

(51) Int. Cl.$^6$ : **G11B 5/712**, H01F 1/06

(21) Anmeldenummer : **92106758.3**

(22) Anmeldetag : **21.04.92**

(54) **Verfahren zum Stabilisieren von nadelförmigen, im wesentlichen aus Eisen bestehenden, ferromagnetischen Metallpulvern.**

(30) Priorität : **10.05.91 DE 4115426**

(43) Veröffentlichungstag der Anmeldung :
**11.11.92 Patentblatt 92/46**

(45) Bekanntmachung des Hinweises auf die Patenterteilung :
**15.02.95 Patentblatt 95/07**

(84) Benannte Vertragsstaaten :
**DE FR GB NL**

(56) Entgegenhaltungen :
**EP-A- 0 063 730**
**US-A- 4 318 735**
**PATENT ABSTRACTS OF JAPAN vol. 5, no. 116 (M-80)25. Juli 1981**

(73) Patentinhaber : **BASF Magnetics GmbH**
**Dynamostrasse 3**
**D-68165 Mannheim (DE)**

(72) Erfinder : **Klingelhoefer, Paul, Dr.**
**Ifflandstrasse 3**
**W-6800 Mannheim 1 (DE)**

(74) Vertreter : **Langfinger, Klaus-Dieter, Dr. et al**
**BASF Aktiengesellschaft,**
**Patentabteilung ZDX - C 6**
**D-67056 Ludwigshafen (DE)**

## Beschreibung

Verfahren zum Stabilisieren von nadelförmigen, im wesentlichen aus Eisen bestehenden, ferromagnetischen Metallpulvern

Die Erfindung betrifft ein Verfahren zum Stabilisieren von nadelförmigen, im wesentlichen aus Eisen bestehenden, ferromagnetischen Metallpulvern gegen Oxidation und Korrosion durch eine zweistufige Reaktion mit einem Sauerstoff enthaltenden Inertgas.

Die Verwendung von nadelförmigen ferromagnetischen Metallteilchen mit Einbereichsverhalten als magnetisierbares Material für die Herstellung von magnetischen Aufzeichnungsträgern ist bekannt. Die Suche nach verbesserten Materialien ergibt sich aus dem Wunsch nach immer höheren Speicherdichten pro Einheitsfläche. Dies bedeutet, daß die Teilchen kleinvolumiger und höher koerzitiv werden. Für die praktische Anwendung muß die Feinteiligkeit der Teilchen mit der Forderung nach einer ausreichenden Remanenz und einer guten magnetischen und chemischen Stabilität in Einklang gebracht werden. Mit diesen Forderungen ergibt sich als untere Grenze des Partikelvolumens für hochkoerzitive Metallteilchen ein Volumen von $0,6.10^{-17}$ cm$^3$. Metallteilchen in diesem Größenbereich sind jedoch bekanntermaßen pyrophor.

Es ist nun bekannt, pyrophore Metallpulver in der Weise zu stabilisieren, daß man die Metallteilchen durch kontrollierte Oxidation mit einer Oxidschicht umhüllt. Dies kann bei einer Temperatur zwischen 20 und 50°C durch überleiten von Inertgas geschehen, das zunächst wenig Sauerstoff enthält und dessen Sauerstoffkonzentration im Laufe der Reaktion langsam gesteigert wird (DE-A 20 28 536). In ähnlicher Weise wird auch gemäß den in der DE-A 22 12 934 und DE-A 23 61 539 offenbarten Verfahren vorgegangen. Diese Verfahren haben jedoch den Nachteil, daß wegen der hohen Reaktionsenthalpie bei der Bildung der Eisenoxidhülle einerseits die Reaktionstemperatur möglichst tief und andererseits auch der Sauerstoffgehalt des Gases sehr niedrig sein muß, damit durch entsprechende Wärmetransportvorgänge die entstehende Reaktionswärme abgeführt werden kann. Dadurch sind entsprechend vorgenommene Stabilisierungsprozesse meist sehr zeitaufwendig. Auch sind die oxidischen Schutzschichten nicht einheitlich genug. Zwar lassen sich bei höheren Temperaturen knapp unterhalb der Selbstentzündlichkeitstemperatur kürzere Stabilisierungszeiten erreichen, jedoch ist dann die Kontrolle des Reaktionsablaufs äußerst kritisch und die Ergebnisse sind nur schwer reproduzierbar. Es ist daher auch schon vorgeschlagen worden den Passivierungsschritt in zwei Stufen durchzuführen. Aus der NL-A 7 018 910 ist ein Verfahren zur Passivierung pyrophorer ferromagnetischer Metallpulver mit sauerstoffhaltigem Inertgas bekannt, bei dem in einer ersten Passivierungsstufe 30°C über der Ausgangstemperatur nicht überschritten werden darf und in einer zweiten Passivierungsstufe minimal 50°C und maximal 150°C zugelassen sind. Die Reaktionstemperatur wird durch Dosierung der Sauerstoffzufuhr gesteuert. Nachteilig an einem solchen Verfahren bleibt jedoch die schlechte Kontrolle und Reproduzierbarkeit einer solchen Reaktion bei Temperaturen um oder über 70°C.

Aufgabe der vorliegenden Erfindung war es deshalb, ein verbessertes Verfahren zur Stabilisierung von nadelförmigen, im wesentlichen aus Eisen bestehenden ferromagnetischen Metallpulvern bereitzustellen, das eine ausgezeichnete Oxidationsstabilität und Korrosionsbeständigkeit der Metallteilchen ergibt.

Es wurde nun gefunden, daß mit einer zweistufigen Reaktion des nadelförmigen, im wesentlichen aus Eisen bestehenden, ferromagnetischen Metallpulvers mit einem Sauerstoff enthaltenden Inertgas, wobei in der ersten Stufe der Sauerstoffanteil im Inertgas nicht mehr als 2 Vol.% beträgt, die Aufgabe gelöst werden kann, wenn in der zweiten Stufe ein Sauerstoff-Inertgas-Gemisch mit einem Wasserdampfgehalt von 70 bis 95 % rel. Feuchte und einem Sauerstoffanteil von 10 bis 20 % eingesetzt wird.

Zur Durchführung des erfindungsgemäßen Verfahrens werden die in bekannter Weise hergestellten feinteiligen pyrophoren ferromagnetischen und nadelförmigen, im wesentlichen aus Eisen bestehenden Metallteilchen einem sauerstoffhaltigen Inertgasstrom, im allgemeinen einem Luft-Stickstoff-Strom ausgesetzt. Dies kann dadurch geschehen, daß in einem Drehrohrofen der Gasstrom über das Material geleitet wird oder daß das Verfahren in hierfür bekannten Wirbelschichtöfen mit einem Luft-Inertgas-Gemisch als Wirbelgas durchgeführt wird. Die Dauer dieser ersten Behandlungsstufe beträgt 90 bis 240, vorzugsweise 120 Minuten.

In der sich daran anschließenden zweiten Stufe des Stabilisierungsprozesses wird dem Sauerstoff-Inertgas-Gemisch Wasserdampf in einer Menge von 70 bis 95 % rel. Feuchte zugemischt. Der Sauerstoffanteil beträgt hierbei insbesondere 10 bis 20 Vol.%.

Für das erfindungsgemäße Verfahren ist es wesentlich, daß die beiden Stufen des Stabilisierungsprozesses unmittelbar hintereinander durchgeführt werden. Andernfalls können die in der ersten Behandlungsstufe gewonnenen Teilchen ihren pyrophoren Charakter wiedergewinnen.

Besonders vorteilhaft läßt sich das erfindungsgemäße Verfahren bei den nadelförmigen, im wesentlichen aus Eisen bestehenden, ferromagnetischen Metallpulvern durchführen, welche weniger als 0,4 Gew.% Nickel enthalten. Solche ferromagnetische Metallteilchen mit hohen Werten für Koerzitivfeldstärke und Magnetisierung sind bereits beschrieben (DE-A 37 43 039). Werden nun diese bekannten Metallpulver dem erfindungsgemäßen Stabilisierungsprozeß unterzogen, so lassen sich besonders vorteilhafte ferromagnetische Materialien erhalten, welche sich insbesondere durch eine Koerzitivfeldstärke von mehr als 120 kA/m und einem durch den Stabilisierungsprozeß bedingten Verlust an Sättigungsmagnetisierung in feucht-warmer Atmosphäre (65°C, 95 % rel. Feuchte, Testdauer 7 Tage) von weniger als 15 % auszeichnen. Diese ferromagnetischen Metallteilchen weisen außerdem einen Wassergehalt von weniger als 1 % und einen Nickelgehalt von weniger als 0,4 Gew.% auf.

Das erfindungsgemäße Verfahren erlaubt eine wirkungsvolle Stabilisierung der feinteiligen ferromagnetischen Metallteilchen. Durch das erfindungsgemäße Verfahren werden die Metallteilchen von einer besonders einheitlichen, gleichmäßigen und dichten oxidischen Hülle umschlossen. Dies äußert sich in einer engen Schaltfeldstärkenverteilung, die vor allem auch nach Durchführung des beschriebenen Lagertests erhalten bleibt.

Solche stabilisierten Metallteilchen eignen sich damit in hervorragender Weise zur Herstellung von magnetischen Aufzeichnungsträgern, da sie sich ohne besondere Vorsichtsmaßnahmen verarbeiten lassen.

Die Erfindung sei anhand der folgenden Beispiele näher erläutert. An den resultierenden Materialien wurde mit einem Schwingmagnetometer in einem Meßfeld von 400 kA/m die Koerzitivfeldstärke $H_c$ [kA/m] bei einer mittleren Stopfdichte von $\rho$ = 0,7 g/cm$^3$ sowie die spezifische Remanenz $M_{r/\rho}$ und die spezifische Sättigung $M_{m/\rho}$ in [nTm$^3$/g] bestimmt. Außerdem wurde noch die Schaltfeldstärkenverteilung SFD nach Williams und Comstock (AIP Conf. Proc. 5 (1971), 738) gemessen. Zur Prüfung der Stabilität der Materialien wurden diese einem einwöchigen Klimatest (65°C, 95 % rel. Feuchte) unterzogen und der prozentuale Verlust bestimmt bzw. die SFD∗ angegeben.

Beispiel 1

Herstellung nickelfreien $\alpha$-Fe$_2$O$_3$-Vorläufer-Materials gemäß DE-A 37 43 039

In einem mit Rührer, Begasungsvorrichtung und Rückflußkühler ausgestatteten, thermostatisierbaren Rührgefäß werden 1223 g FeSO$_4$ x 7 H$_2$O mit VE-Wasser auf ein Volumen von 6 l gelöst; die Lösung wird mit 5,79 g einer 95 %igen Pyrophosphorsäure versetzt. Nach Thermostatisierung auf 40°C wird durch Zusatz von 1226 ml einer 14,8 %igen NaOH ein Teil der Fe$^{2+}$-Ionen als Hydroxid gefällt. Die Fällung wird unter Beibehalten der Temperatur durch Einleiten von Luft oxidiert. Nach Abfall des pH-Wertes der Suspension unter pH 4 werden die in der ersten Stufe

gebildeten $\alpha$-FeOOH-Kristallite durch einen Wachstumsprozeß vergrößert. Das Kristallwachstum erfolgt bei einer Temperatur von 70°C und einem pH-Wert von 5,2, der durch kontinuierliches Zudosieren einer mit 35 g 26 %iger Wasserglaslösung versetzten 14,8 %igen NaOH auf diesem Wert gehalten wird. Nach Abschluß der Oxidationsreaktion wird die formstabilisierende Ausrüstung des Pigments durch Zugabe von weiteren 27 g 26 %iger Wasserglaslösung und Einstellen auf pH 5,2 vervollständigt.

Das so hergestellte $\alpha$-FeOOH-Pigment wird von der Mutterlauge abfiltriert, sulfatfrei gewaschen und getrocknet. Es wird anschließend bei 800°C unter Stickstoff-Atmosphäre während 90 min entwässert und getempert. Das dabei erhaltene $\alpha$-Fe$_2$O$_3$-Pigment dient als Ausgangsmaterial für die nachfolgend beschriebenen Versuche.

Beispiel 2

10 g des in Beispiel 1 hergestellten $\alpha$-Fe$_2$O$_3$-Materials wurden in einem Labordrehrohrofen während 6 h bei 450°C mit Wasserstoff reduziert. Nach Abkühlen auf Raumtemperatur unter Stickstoffatmosphäre wurde das Pigment in einer ersten Stufe durch überleiten einer Stickstoff-Luft-Mischung mit 1,25 Vol.% Sauerstoff während 90 Minuten passiviert und gleich anschließend durch Behandlung unter Luft mit 95 % rel. Feuchte bei 65°C für 24 h endgültig stabilisiert. Der Versuch wurde wiederholt; die Daten der so erhaltenen Pulver sind in der Tabelle aufgeführt.

Vergleichsversuch 1

Es wird wie in Beispiel 2 verfahren, jedoch wurde auf die Stabilisierungsbehandlung mit Luft von 95 % rel. Feuchte verzichtet. Die Daten des erhaltenen Pulvers sind ebenfalls in der Tabelle enthalten.

Vergleichsversuch 2

Es wird wie in Beispiel 2 verfahren, jedoch wird die Stabilisierungsstufe statt bei 65°C und 95 % rel. Feuchte bei 65°C und trockener Luftatmosphäre durchgeführt. Das erhaltene Pulver bestand aus vollständig oxidiertem $\gamma$-Fe$_2$O$_3$.

Vergleichsversuch 3

Statt gemäß dem Verfahren aus Beispiel 2 wird wie folgt passiviert: In einer ersten Stufe wird das Pigment für 2 h bei 65°C in einer Stickstoffatmosphäre mit 95 % rel. Feuchte behandelt, anschließend in einer zweiten Stufe mit einem Luft/Stickstoff-Gemisch mit 4,2 Vol.% Sauerstoff und ebenfalls 95 % rel. Feuchte. Die Daten des erhaltenen Pulvers sind in der Tabelle aufgeführt.

Vergleichsversuch 4

Es wurde wie in Beispiel 2 verfahren, jedoch wurde zum Passivieren in der ersten Verfahrensstufe verwendeten Atmosphäre zusätzlich Wasserdampf beigemischt, indem das Gas vor Eintritt in den Drehrohrofen durch ein bei Raumtemperatur gehaltenes Wasserbad geleitet wurde. Die zweite Verfahrensstufe wurde durch eine Nachtemperung des passivierten Materials bei 300°C für 1 Stunde unter Stickstoff ersetzt. Das Pigment besitzt die in der Tabelle angegebenen Pulverdaten. Nach Lagerung bei Raumtemperatur für 1 Woche trat spontane Durchoxidation zu $\gamma$-Fe$_2$O$_3$ auf.

Vergleichsversuch 5

Es wurde wie in Beispiel 2 verfahren, jedoch enthielt die zur Passivierung in der ersten Verfahrensstufe verwendete Gasmischung 4,2 Vol.% Sauerstoff. Auf die zweite Verfahrensstufe wurde verzichtet. Die Pulverdaten sind in der Tabelle enthalten.

Tabelle

| | magnet. Eigenschaften vor | | | | nach Klimatest | | |
|---|---|---|---|---|---|---|---|
| | $H_c$ | $M_m/\rho$ | $M_r/\rho$ | SFD | $\Delta M_m/\rho$ % | $\Delta H_c$ % | SFD* |
| Beispiel 2 | 123,3 | 113,3 | 61,1 | 0,62 | -10,5 | - 3,5 | 0,68 |
| Vergleichsversuch 1 | 122,1 | 136,4 | 73,8 | 0,64 | nach Klimalagerung durchoxidiert | | |
| Vergleichsversuch 2 | Das Pigment war zu $\gamma$-Fe$_2$O$_3$ durchoxidiert | | | | | | |
| Vergleichsversuch 3 | 122,2 | 127,8 | 66,6 | 0,65 | -16,7 | - 6,1 | 0,74 |
| Vergleichsversuch 4 | 119,1 | 145,9 | 77,9 | 0,64 | -47,2 | -49,5 | - |
| Vergleichsversuch 5 | 106,1 | 128,4 | 65,3 | 0,78 | - 6,0 | - 0,5 | 0,80 |

## Patentansprüche

1. Verfahren zum Stabilisieren von nadelförmigen, im wesentlichen aus Eisen bestehenden, ferromagnetischen Metallpulvern gegen Oxidation und Korrosion durch eine zweistufige Reaktion des Metallpulvers mit einem Sauerstoff enthaltenden Inertgas, mit der Maßgabe, daß in der ersten Stufe der Sauerstoffanteil im Inertgas nicht mehr als 2 Vol.% beträgt, dadurch gekennzeichnet, daß in der zweiten Stufe ein Sauerstoff-Inertgas-Gemisch mit einem Wasserdampfgehalt von 70 bis 95 % rel. Feuchte und einem Sauerstoffanteil von 10 bis 20 % eingesetzt wird.

2. Nadelförmiges, im wesentlichen aus Eisen bestehendes, ferromagnetisches Metallpulver, erhalten gemäß Anspruch 1, dadurch gekennzeichnet, daß die stabilisierten, weniger als 0,4 Gew.% Nickel enthaltenden Metallteilchen eine Koerzitivfeldstärke von mehr als 120 kA/m aufweisen und sich die Sättigungsmagnetisierung bei einer Lagerung bei 65°C und 95 % rel. Feuchte während 7 Tagen um weniger als 15 % vermindert.

## Claims

1. A process for stabilizing acicular, ferromagnetic metal powders essentially consisting of iron against oxidation and corrosion by a two-stage reaction of the metal powder with an oxygen-containing inert gas, with the proviso that the oxygen content of the inert gas is not more than 2% by volume in the first stage, wherein an oxygen/inert gas mixture having a water vapor content of from 70 to 95% relative humidity and an oxygen content of from 10 to 20% is used in the second stage.

2. An acicular, ferromagnetic metal powder essentially consisting of iron and obtained as claimed in claim 1, wherein the stabilized metal particles containing less than 0.4% by weight of nickel have a coercive force of more than 120 kA/m, and the saturation magnetization decreases by less than 15% during storage at 65°C and 95% relative humidity for 7 days.

## Revendications

1. Procédé pour stabiliser des poudres métalliques ferromagnétiques aciculaires, constituées essentiellement de fer, contre l'oxydation et la corrosion, par une réaction de la poudre métallique, en deux phases, avec un gaz inerte contenant de l'oxygène, sous réserve que, dans la première phase, la partie oxygène dans le gaz inerte ne soit pas supérieure à 2 % en volume, caractérisé par le fait que, dans la deuxième phase, est introduit un mélange de gaz inerte oxygène ayant une teneur en vapeur d'eau d'humidité relative de 70 à 95 % et une proportion d'oxygène de 10 à 20 %.

2. Poudres métalliques ferromagnétiques aciculaires constituées essentiellement de fer obtenues selon la revendication 1, caractérisé par le fait que les particules métalliques stabilisées, contenant moins de 0,4 % en poids de nickel, présentent une intensité de champ coercitif de plus de 120 kA/m et que la magnétisation de saturation, pour un séjour pendant 7 jours à 65°C et une humidité relative de 95 %, diminue de moins de 15 %.